# EUROPÄISCHE PATENTANMELDUNG

(11) **EP 1 036 701 A2**
(43) Veröffentlichungstag der Anmeldung: **20.09.2000**
(21) Anmeldenummer: 00104189.6
(22) Anmeldetag: 01.03.2000
(51) Int. Cl.: B60Q 1/068

(54) **Scheinwerfer für Fahrzeug**

(30) Priorität: 18.03.1999 DE 19912157
(71) Anmelder: Hella KG Hueck & Co., 59552 Lippstadt (DE)
(72) Erfinder: Jakobsmeyer, Helmut, 33106 Paderborn (DE)

(57) **Zusammenfassung**

Scheinwerfer für Fahrzeuge mit einem Gehäuse (1), das über mehrere Befestigungselemente (2) an einem Karosserieteil (3) befestigbar ist, von denen mindestens ein Befestigungselement (2) als Justageelement (9) ausgebildet ist, das eine Durchgangsbohrung für eine Befestigungsschraube (15) und ein Außengewinde (13) zur längsverschieblichen Befestigung an dem Gehäuse (1) aufweist, wobei das Justageelement (9) an seinem dem Karosserieteil benachbarten Ende etwa konzentrisch zum Außengewinde (13) einen Zahnkranz (18) aufweist, über den das Justageelement (9) mit Hilfe eines in einer dem Zahnkranz (18) benachbarten Führungsbohrung (22) seitlich geführten Werkzeuges schraubbar ist.

## Beschreibung

Die Erfindung betrifft einen Scheinwerfer für Fahrzeuge mit einem Gehäuse, das über mehrere Befestigungselemente an einem Karosserieteil befestigbar ist, von denen mindestens ein Befestigungselement als Justageelement ausgebildet ist, das eine Aufnahmebohrung für eine Befestigungsschraube und ein Außengewinde zur längsverschieblichen Befestigung an dem Gehäuse aufweist.

Aus der DE 42 28 889 A1 ist ein Scheinwerfer für Fahrzeuge bekannt, der ein Gehäuse aufweist, das über mehrere Befestigungselemente an einem Karosserieteil befestigbar ist. Ein Befestigungselement ist dabei als Justageelement ausgebildet, das als eine Art Hohlschraube ausgebildet ist. Das Justageelement weist ein Außengewinde zur längsverschieblichen Befestigung an dem Gehäuse auf Zusammen mit dem in das Gehäuse eingeschraubten Justageelement wird das Gehäuse über eine Aufnahmebohrung des Justageelementes mit Hilfe einer Befestigungsschraube, die durch die Aufnahmebohrung des Justageelementes und weiter durch eine entsprechende Bohrung der Karosserie geführt wird, und einer Mutter befestigt. Zur Justierung des Justageelementes muß die Befestigungsschraube etwas gelöst sein, so daß das Justageelement mit Hilfe zweier am Umfang angeordneter Stifte und einem entsprechenden Werkzeug durch Drehen in Längsrichtung verschoben werden kann. Nach erfolgter Längsjustierung des Justageelementes wird die Befestigungsschraube mit einem anderen Werkzeug wieder festgezogen.

Nachteilig bei dem bekannten Scheinwerfer ist, daß zum Verdrehen des Justageelementes ein relativ aufwendiges Werkzeug mit relativ hohen Kraftaufwand bei einem kostengünstigen selbstschneidenden Gewinde verwendet werden muß.

Aufgabe der vorliegenden Erfindung ist es daher, den bekannten Scheinwerfer so zu verbessern, daß mit einem einfachen Werkzeug unter möglichst geringem Kraftaufwand das Justageelement in das Gehäuse einschraubbar ist.

Diese Aufgabe wird erfindungsgemäß in Verbindung mit dem Oberbegriff des Anspruches 1 dadurch gelöst, daß das Justageelement an seinem dem Karosserieteil benachbarten Ende etwa konzentrisch zum Außengewinde einen Zahnkranz aufweist, über den das Justageelement mit Hilfe eines in einer dem Zahnkranz benachbarten Führungsbohrung seitlich geführten Werkzeuges schraubbar ist.

Dadurch, daß das Justageelement einen Zahnkranz aufweist, über den es mit Hilfe eines Werkzeuges schraubbar ist, kann zum einen ein relativ einfaches - beispielsweise ein Kreuzschlitzschraubendreher - Werkzeug verwendet werden und zum anderen entsteht durch den Zahnkranz in Verbindung mit dem Werkzeug eine starke Untersetzung, die ein kraftsparendes und gefühlvolles Verdrehen des Justageelementes ermöglicht.

Gemäß einer bevorzugten Ausführungsform der Erfindung ist der Zahnkranz auf die Spitze des Werkzeuges, das als Kreuzschlitzschraubendreher ausgebildet ist, abgestimmt.

Durch die entsprechende Ausbildung des Zahnkranzes kann als Werkzeug ein einfacher Kreuzschlitzschraubendreher verwendet werden, wie er auch beispielsweise für eine entsprechend ausgebildete Befestigungsschraube verwendet werden kann.

Nach einer weiteren bevorzugten Ausführungsform der Erfindung ist das Justageelement mit seiner Längsachse in etwa horizontaler Richtung angeordnet. Die Führungsbohrung ist dabei am Gehäuse so angeordnet, daß ihre Führungsbohrungslängsachse etwa parallel zur Längsachse des Justageelementes verläuft.

Durch eine solche Anordnung ist es beispielsweise möglich, den Scheinwerfer von vorn in die Karosserie einzusetzen, die Befestigungsschraube von vorn zu befestigen und das Justageelement von einer der Frontseite abgewandten Rückseite her zu justieren. Es ist aber auch möglich, das Justageelement bzw. das Gehäuse von der Rückseite her mit der Befestigungsschraube zu befestigen und die Justage von der Frontseite her durchzuführen.

Nach einer weiteren bevorzugten Ausführungsform der Erfindung ist das Justageelement mit seiner Längsachse in etwa vertikaler Richtung angeordnet. Die Führungsbohrung ist dabei ebenfalls am Gehäuse so angeordnet, daß ihre Führungsbohrungslängsachse etwa parallel zur Längsachse des Justageelementes verläuft.

Dadurch ist es möglich, den Scheinwerfer beispielsweise von der Frontseite her in die entsprechende Karosserieöffnung einzusetzen und von der Rückseite der Karosserie her in vertikaler Richtung über das Justageelement zu befestigen und zu justieren.

Gemäß einer weiteren bevorzugten Ausführungsform der Erfindung ist die Befestigungsschraube mit einer an der Karosserie angeordneten Gewindehülse verschraubbar.

Dadurch, daß an der Karosserie eine entsprechende Gewindehülse angeordnet ist, läßt sich die Montage weiter vereinfachen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

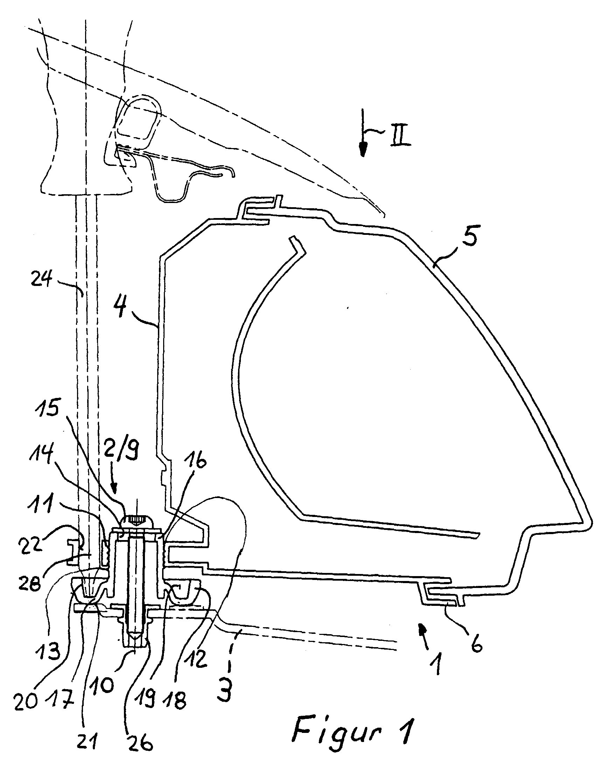

- Figur 1:: Eine Seitenansicht eines Scheinwerfers für Fahrzeuge im Schnitt mit vertikal angeordneten Justageelement und mit gestrichelt angedeutetem Karosserieteil und gestrichelt angedeutetem Kreuzschlitzschraubendreher,

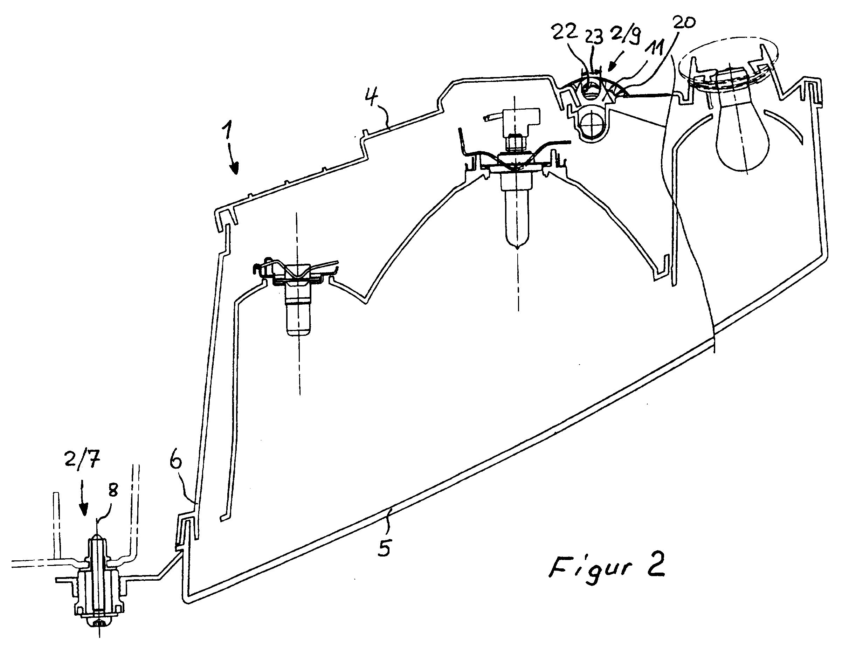

- Figur 2:: eine Draufsicht auf den Scheinwerfer von Figur 1 aus Richtung II im Schnitt,
- Figur 3:: eine Seitenansicht eines Scheinwerfers für Fahrzeuge im Schnitt mit horizontal angeordnetem Justageelement.

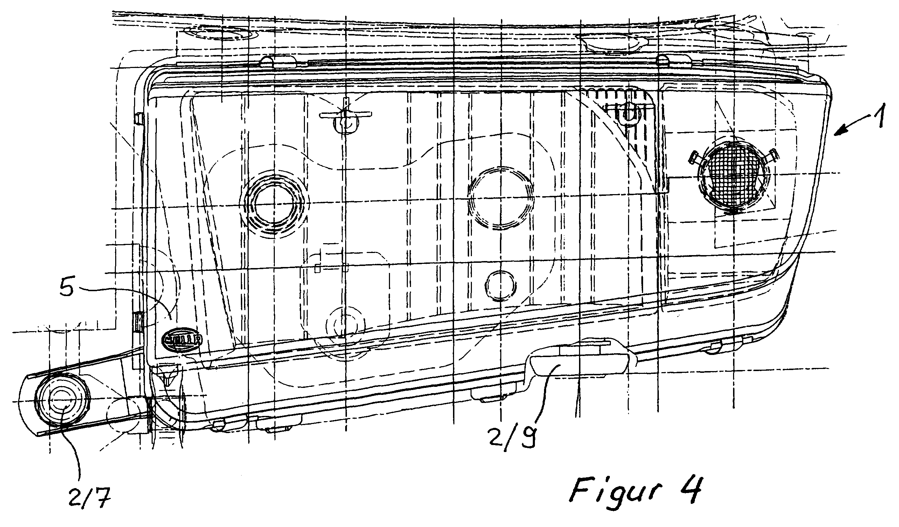

- Figur 4:: eine Vorderansicht des Scheinwerfers von Figur 1 in verkleinerter Darstellung und

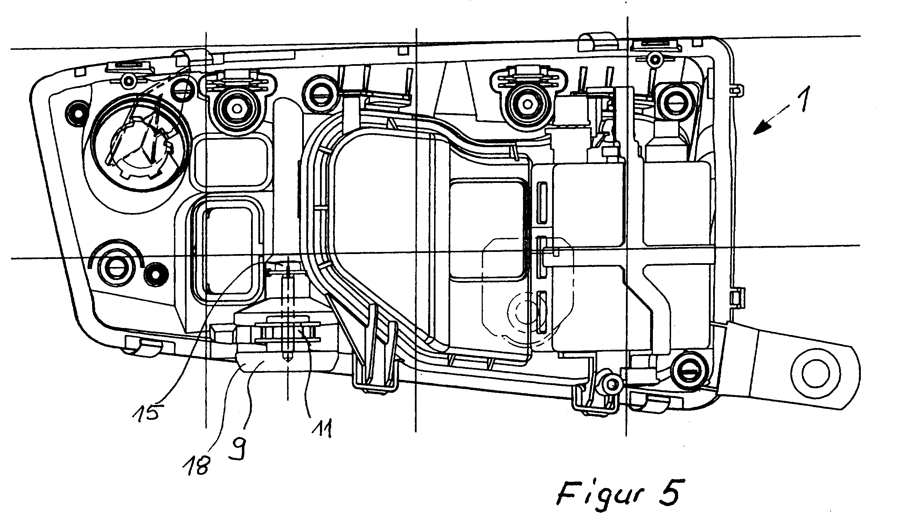

- Figur 5:: eine Rückansicht des Gehäuses des Scheinwerfers von Figur 4 in verkleinerter Darstellung mit Justageelement.

Ein Scheinwerfer für Fahrzeuge besteht im wesentlichen aus einem Gehäuse 1 und Befestigungselementen 2 zur Befestigung an einem Karosserieteil 3.

Das Gehäuse 1 wird auf seiner einer Gehäuserückseite 4 abgewandten Vorderseite von einer Abdeckscheibe 5 abgedeckt. Das Gehäuse 1 ist über zwei in vertikaler Richtung unten angeordnete Befestigungselemente 2 und über zwei nicht dargestellte in vertikaler Richtung oben angeordnete Befestigungselemente an der Karosserie des Fahrzeuges befestigbar. Im unteren Bereich des Gehäuses 1 ist als Befestigungselement 2 an einer der Abdeckscheibe 5 benachbarten Vorderseite 6 seitlich ein unteres äußeres Befestigungselement 7 angeordnet, dessen Längsachse 8 in horizontaler Richtung verläuft. In einem Abstand zum unteren äußeren Befestigungselement 7 ist im unteren Bereich an der Gehäuserückseite 4 als Befestigungselement 2 ein Justageelement 9 angeordnet, dessen Längsachse 10 in vertikaler Richtung verläuft.

Die Gehäuserückseite 4 weist an ihrem unteren Ende eine in horizontaler Richtung auskragende Elementhalterung 11 mit einer Durchgangsbohrung 12 auf, in die das Justageelement 9 mit einem selbstschneidenden Außengewinde 13 von unten her eingeschraubt ist. Das Justageelement 9 weist konzentrisch zu seinem Außengewinde 13 eine Aufnahmebohrung 14 auf, in die eine Befestigungsschraube 15 von einem oberen Ende 16 des Justageelementes 9 her einsteckbar ist. An seinem dem oberen Ende 16 abgewandten unteren Ende 17, das dem als Auflagefläche dienenden Karosserieteil 3 benachbart ist, weist das Justageelement 9 einen Zahnkranz 18 auf. Der Zahnkranz 18 ist konzentrisch zum Außengewinde 13 angeordnet und weist zur Elementhalterung 11 hin eine Art umlaufende Nut 19 auf, an deren außenliegender Begrenzungsfläche eine Vielzahl von Zähnen 20 angeordnet ist. Die der umlaufenden Nut 19 abgewandte Stirnfläche des Zahnkranzes 18 ist als Auflagefläche 21 ausgebildet und gegen das Karosserieteilt 3 anschlagbar.

In einem Abstand zur Durchgangsbohrung 12 weist die Elementhalterung 11 eine Führungsbohrung 22 auf, die dem Zahnkranz 18 bzw. dessen umlaufender Nut 19 benachbart ist.

Die Führungsbohrung 22 ist mit ihrer lichten Weite 23 auf den Außendurchmesser eines Kreuzschlitzschraubendrehers 24 abgestimmt. Die Zähne des Zahnkranzes 18 und die Führungsbohrung 22 sind so zueinander angeordnet, daß der durch die Führungsbohrung 22 mit seiner Spitze 25 eingeführte Kreuzschlitzschraubendreher 24 in die Zähne 20 eingreift. Durch Drehen des Kreuzschlitzschraubendrehers 24 kann dann das Justageelement 9 um seine Längsachse 10 gedreht und damit in seiner Längsrichtung justiert werden. Quer zu seiner Längsachse 10 kann das Justageelement 9 und damit das Gehäuse 1 mit Hilfe eines Spieles zwischen Befestigungsschraube 15 und Aufnahmebohrung 14 justiert werden.

Das Karosserieteil 3 weist eine Gewindehülse 26 auf, in die die Befestigungsschraube 15 mit ihrem freien Ende eingeschraubt werden kann.

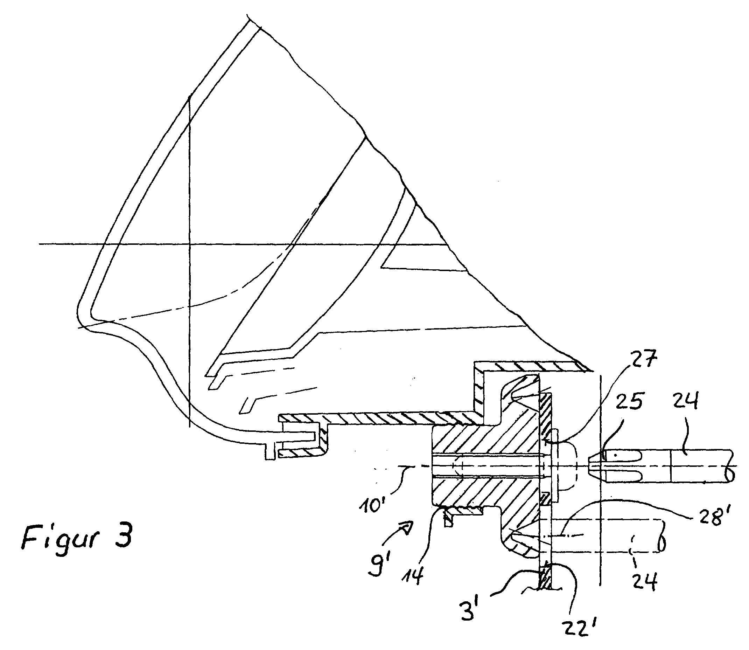

Nach einer anderen Ausführungsform gemäß Figur 3 ist das Justageelement 9' mit seiner Längsachse 10' in horizontaler Richtung angeordnet. Die umlaufende Nut 19' des Zahnkranzes 18' bzw. die Zähne 20' sind dem Karosserieteil 3' zugewandt, das auch die Führungsbohrung 22 für den Kreuzschlitzschraubendreher 24 aufweist. Die Befestigungsschraube 15' wird dabei durch eine Bohrung 27 des Karosserieteiles 3' durchgesteckt und in das Gewinde einer Aufnahmebohrung 14' eingeschraubt.

Zur Montage des Scheinwerfers wird das Gehäuse 1 von vorn in die entsprechende, nicht dargestellte Karosserieöffnung eingesetzt und über die Befestigungselemente 2 mit der Karosserie bzw. dem Karosserieteil 3 verschraubt. Zur Ausrichtung des Gehäuses 1 gegenüber der Karosserie wird das Gehäuse über das Justageelement 9 justiert. Zur Justierung bzw. Längsverschiebung in Richtung der Längsachse 10 wird bei nicht fest angezogener Befestigungsschraube 15 der Kreuzschlitzschraubendreher 24 mit seiner Spitze 25 durch die Führungsbohrung 22 gesteckt und durch Drehen des Kreuzschlitzschraubendrehers 24 das Justageelement 9 in Längsrichtung verschoben. Nach Ausrichtung quer zur Längsachse 10 wird mit Hilfe des Kreuzschlitzschraubendrehers 24 die Befestigungsschraube 15 fest angezogen.

## Patentansprüche

1. Scheinwerfer für Fahrzeuge mit einem Gehäuse, das über mehrere Befestigungselemente an einem Karosserieteil befestigbar ist, von denen mindestens ein Befestigungselement als Justageelement ausgebildet ist, das eine Aufnahmebohrung für eine Befestigungsschraube und ein Außengewinde zur längsverschieblichen Befestigung an dem Gehäuse aufweist, dadurch gekennzeichnet, daß das Justageelement (9, 9') an seinem dem Karosserieteil (3, 3') benachbarten Ende etwa konzentrisch zum Außengewinde (13) einen Zahnkranz (18, 18') aufweist, über den das Justageelement (9, 9') mit Hilfe eines in einer dem Zahnkranz (18, 18') benachbarten Führungsbohrung seitlich geführten Werkzeuges schraubbar ist.

2. Scheinwerfer nach Anspruch 1, dadurch gekennzeichnet, daß der Zahnkranz (18, 18') auf die Spitze (25) des Werkzeuges, das als Kreuzschlitzschraubendreher (24) ausgebildet ist, abgestimmt ist.

3. Scheinwerfer nach Anspruch 1 oder 2, dadurch gekennzeichnet, daß das Justageelement (9') mit seiner Längsachse (10') in etwa horizontaler Richtung angeordnet ist.

4. Scheinwerfer nach Anspruch 1 oder 2, dadurch gekennzeichnet, daß das Justageelement (9) mit seiner Längsachse (10) in etwa vertikaler Richtung angeordnet ist.

5. Scheinwerfer nach Anspruch 3 oder 4, dadurch gekennzeichnet, daß die Führungsbohrung (22, 22') so angeordnet ist, daß ihre Führungsbohrungslängsachse (28, 28') etwa parallel zur Längsachse (10, 10') des Justageelementes (9, 9') verläuft.

6. Scheinwerfer nach einem der Ansprüche 1 bis 5, dadurch gekennzeichnet, daß die Befestigungsschraube (15) mit einer an dem Karosserieteil (3) angeordenten Gewindehülse (26) verschraubbar ist.

7. Scheinwerfer nach einem der Ansprüche 1 bis 5, dadurch gekennzeichnet, daß die Befestigungsschraube (15') in die Aufnahmebohrung (14) des Justageelementes (9') einschraubbar ist.

8. Scheinwerfer nach einem der Ansprüche 1 bis 7, dadurch gekennzeichnet, daß das Außengewinde (13) des Justageelementes (9, 9') als selbstschneidendes Gewinde ausgebildet ist.

9. Scheinwerfer nach einem der Ansprüche 1 bis 8, dadurch gekennzeichnet, daß das Gehäuse (1,1') von vorn in eine Karosserieöffnung einsetzbar ist.

10. Scheinwerfer nach einem der Ansprüche 1 bis 9, dadurch gekennzeichnet, daß das Gehäuse (1, 1') von seiner einer Fahrzeugfrontseite abgewandten Gehäuserückseite (4) her nachträglich justierbar ist.
